# EUROPÄISCHE PATENTSCHRIFT

(11) **EP 0 813 993 B1**
(45) Veröffentlichungstag und Bekanntmachung des Hinweises auf die Patenterteilung: **07.08.2002**
(21) Anmeldenummer: 97109007.1
(22) Anmeldetag: 04.06.1997
(51) Int. Cl.: B60N 2/46, B60N 2/38

(54) **Steuereinrichtung für Nutzfahrzeuge, insbesondere für landwirtschaftlich nutzbare Schlepper**
Control device for a utility vehicle, in particular for an agricultural tractor
Dispositif de commande d'un véhicule utilitaire, en particulier d'un tracteur utilisable en agriculture

(30) Priorität: 19.06.1996 DE 19624463
(43) Veröffentlichungstag der Anmeldung: 29.12.1997
(73) Patentinhaber: Agco GmbH & Co., 87616 Marktoberdorf (DE)
(72) Erfinder: Epple, Johann, 87616 Marktoberdorf (DE)

(56) Entgegenhaltungen:
- EP-A- 0 537 718
- WO-A-94/26549
- US-A- 4 055 230
- US-A- 4 200 166
- US-A- 5 042 314
- US-A- 5 086 869
- US-A- 5 086 870

## Beschreibung

Die Erfindung betrifft eine Steuereinrichtung für Nutzfahrzeuge, insbesondere für landwirtchaftlich nutzbare Schlepper, mit einem nahe dem vorderen Endbereich der Armlehne des Fahrersitzes angeordneten Schaltelemententräger für eine Gruppe von Schaltelementen zur Steuerung verschiedener Fahrzeugaggregate, die eine Vielzahl Schalter und einen Handschalthebel umfasst, und der eine mit sphärischer Oberfläche versehene Handauflage für die Handfläche des Fahrzeugführers zugeordnet ist. Eine Steuereinrichtung dieser Art ist in WO 94/26549 A offenbart.

Aus der EP 0 537 718 A1 sind Steuereinrichtungen in Pkw's bekannt geworden, die es dem Fahrzeugführer gestatten, eine Vielzahl Aggregate oder Funktionen des Fahrzeuges mit der Hand seines auf der Armlehne des Fahrersitzes ruhenden Unterarmes zu steuern. Die bekannte Steuereinrichtung eignet sich jedoch nicht für Nutzfahrzeuge wie Ackerschlepper, bei denen während des Arbeitseinsatzes zwar nur verhältnismäßig wenige Schaltelemente, diese aber sehr oft betätigt werden müssen. Eine solche Tätigkeit führt zu einer schnellen Ermüdung des Fahrzeugführers, da die Stellung des Unterarmes relativ zur Armlehne wiederholt geändert werden muß,um die verschiedenen Schalter zu erreichen, und zum anderen die Hand dabei eine unnatürliche Stellung einnimmt.

Die WO 94/26549 A beschreibt eine Steuereinheit für Motorfahrzeuge, die einen von einer Schalteinrichtung emporragenden Handschalthebel und eine Vielzahl vom Handschalthebel getragene Schalter umfasst. Die Schalter befinden sich in Fingerweite vom Schalthebelknauf, so daß sie mit den freien Fingern der auf der kugelförmigen Oberfläche des Schalthebelknaufs aufliegenden Hand des Fahrzeugführers betätigt werden können. Diese Steuereinrichtung eignet sich nicht für wiederholte Betätigungen des Handschalthebels und der Schalter über lange Zeiträume, während denen die Hand auf dem Schalthebelknauf aufliegt, da diese ständige Belastung des Handschalthebels insbesondere bei fehlender Unterarmabstützung eine rasche Ermüdung des Armes sowie einen starken Verschleiß an Schaltelementen der Schalteinrichtung bewirken kann.

Durch die US 5042314 A ist eine Steuervorrichtung zum Lenken eines Fahrzeuges und Schalten eines Getriebes bekannt geworden. Die Steuervorrichtung weist einen am vorderen Endbereich einer Armlehne angeordneten Schaltelemententräger für einen zum Lenken des Fahrzeuges benötigten, im wesentlichen vertikal emporragenden Handsteuerhebel und einen die Wahl einer gewünschten Getriebestufe ermöglichenden Mehrstellungs-Schalter auf. Der Mehrstellungs-Schalter ist im oberen Bereich des Handsteuerhebels derart angeordnet, dass er mit dem Daumen der den Handsteuerhebel umgreifenden Hand betätigt werden kann. Abgesehen davon, dass bei der bekannten Vorrichtung nicht genügend Platz zur Unterbringung einer größeren Anzahl Schalter zur Verfügung gestellt werden kann, beschränkt auch die Betätigung solcher Schalter mittels lediglich des Daumens deren Anzahl. Außerdem ist wegen der unnatürlichen Stellung der den Handsteuerhebel umfassenden Hand eine wirklich entspannte Handhaltung nicht gegeben, zumal zur Aufrechterhaltung eines sicheren Griffes die Finger ständig angespannt sind.

Dementsprechend besteht die Aufgabe der Erfindung darin, eine Steuereinrichtung der oben beschriebenen Art zu schaffen, die genügend Platz zur Unterbringung einer größeren Anzahl Schalter zur Verfügung stellt und ein ermüdungsfreies Arbeiten über eine längere Zeitdauer ermöglicht.

Zur Lösung dieser Aufgabe wird gemäß Anspruch 1 vorgeschlagen, daß die Handauflage an der nach oben gerichteten Oberfläche des Schaltelemententrägers vorgesehen ist, wobei die Schalter und der Handschalthebel in Bezug auf die Handauflage derart angeordnet sind, daß die Schalter mit den ausgestreckten Fingern der bestimmungsgemäß auf der Handauflage aufliegenden Hand bequem erreich- und betätigbar sind, während sich der Schalthebel zwischen dem Daumen und dem Zeigefinger der Hand befindet.

Infolge dieser Ausgestaltung der Steuereinrichtung wird dem Unterarm des Fahrzeugführers durch die Armlehne des Fahrersitzes und seiner Hand durch die Handauflage eine Unterstützung geboten, die für ein entspanntes Sitzen über einen längeren Zeitraum unbedingt nötig ist. Durch den Handschalthebel, der beim Einnehmen der Sitzposition vom Daumen und Zeigefinger des Fahrzeugführers umgriffen wird, erfolgt eine 'Zentrierung' der Hand auf der Handauflage, so dass die Fingerspitzen immer dieselben Positionen relativ zu den Schaltern (Drucktaster) einnehmen, wodurch das Auffinden der Schalterpositionen mit den Fingerspitzen erleichtert ist. Da jedem Finger mindestens ein Schalter zugeordnet sein kann, erhöht sich zugleich die Anzahl der verfügbaren Schalter beträchtlich.

Die Ausgestaltung der Erfindung nach Anspruch 2 ergibt eine besonders großflächige und damit und angenehme Abstützung der Hand.

Das Merkmal nach Anspruch 3 bewirkt ein bequemes Betätigen der Schalter, weil deren Betätigungsrichtung weitestgehend mit der natürlichen Bewegungsrichtung der Fingerspitzen der auf der Handauflage aufliegenden Hand bei der Schalterbetätigung zusammenfällt.

Weitere, ergonomisch sinnvolle Weiterbildungen der Erfindung gehen aus den übrigen Ansprüchen hervor.

Ein Ausführungsbeispiel der Erfindung wird im folgenden an Hand einer Zeichnung näher erläutert. Es zeigen:
- Fig. 1: eine Seitenansicht des Fahrersitzes eines Nutzfahrzeuges mit Armlehne und
- Fig. 2: eine Ansicht der Armlehne gemäß Fig. 1 von oben.

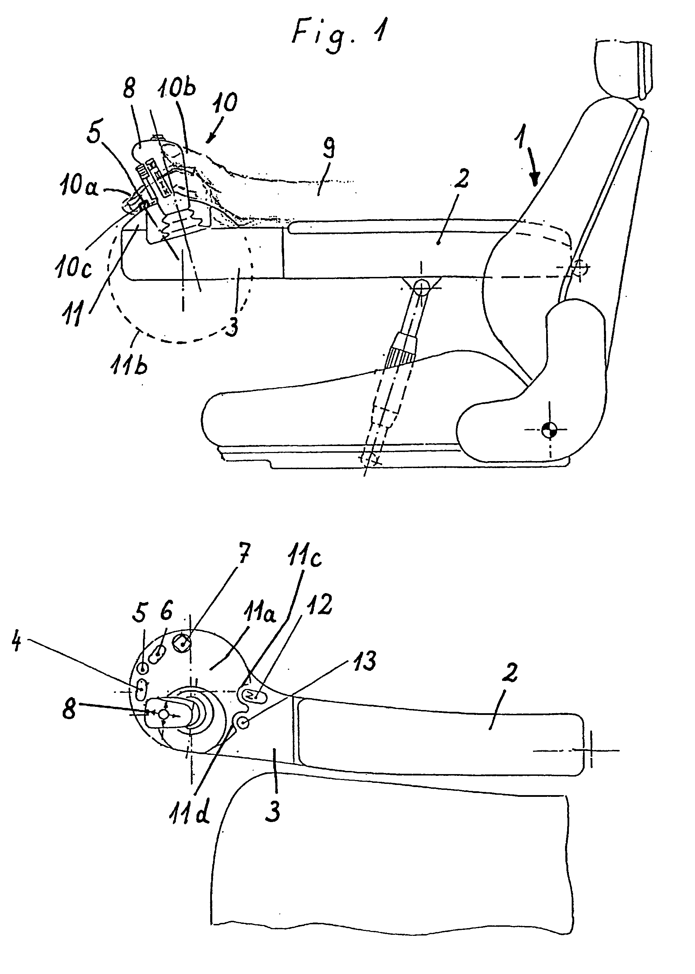

Der allgemein mit 1 bezeichnete Fahrersitz ist mit einer rechten Armlehne 2 versehen, die an ihrem vorderen Ende in einen Schaltelemententräger 3 mit Schaltelementen 4 bis 8 für bestimmte Fahrzeugfunktionen übergeht. Damit der Fahrzeugführer die Schaltelemente 4 bis 8 bei auf der Armlehne 2 ruhendem Unterarm 9 bequem mit der Hand 10 erreichen und betätigen kann, ist der Schaltelemententräger 3 gegenüber der allgemein in Fahrzeuglängsrichtung verlaufenden Armlehne 2 unter einem Winkel von 10°-15° nach vorn und außen abgewinkelt.

Der Schaltelemententräger 3 ist an seiner nach oben gerichteten Oberfläche kugelkalottenförmig ausgebildet, wobei die dabei gebildete Kugelkalotte 11 hinsichtlich Größe und Krümmung der Handfläche eines Menschen angepasst ist. Auf der Kalotte 11 sind als Schaltelemente mehrere Druckschalter 4 bis 7 und ein Handschalthebel 8 von solchen zugehörigen Fahrzeugaggregaten gruppiert, die oftmals und/oder möglichst rasch zu betätigen sind. Bei einem Ackerschlepper dient z. B. der Druckschalter 4 zum Schnellaushub eines Frontanbaugerätes, der Druckschalter 5 zur Unterbrechung sämtlicher Funktionen, der Druckschalter 6 zum Schnellaushub eines Heckanbaugerätes und der Druckschalter 7 als Quadrantenschalter für Elektroventile. Der Handschalthebel 8 in Verbindung mit einer Kreuzschaltung dient zur Steuerung des Fahrantriebes, wobei dem in Fahrtrichtung nach vorn geschobenen Handschalthebel eine Fahrzeugbeschleunigung, dem in Fahrtrichtung nach hinten geschobenen Handschalthebel eine Fahrzeugverzögerung und dem nach links oder nach rechts geschobenen Handschalthebel die Fahrtrichtung vorwärts bzw. rückwärts entspricht.

Die Druckschalter 4 bis 7 und der Handschalthebel 8 sind auf der Kugelkalotte 11 derart zueinander ausgerichtet, daß der Fahrzeugführer die Hand 10 seines auf der Armlehne 2 aufliegenem Unterarms 11 großflächig auf einen Teil der Oberfläche der Kugelkalotte 11, der in diesem Fall als Handauflage 11a dient, abstützen und die Druckschalter 4 bis 7 sowie den Handschalthebel 8 bequem bedienen kann. Die Handauflage 11a befindet sich wegen der in dieser Situation natürlichen Schrägstellung der Hand im in Fahrtrichtung rechten Bereich der Kugelkalotte 11. Die Druckschalter 4 bis 7 befinden sich dabei am vorderen äußeren Rand der Kugelkalotte 11 im Erfassungsbereich der Fingerspitzen 10a und sind durch einen Druck in Normalrichtung leicht zu betätigen, da deren Betätigungsrichtungen annähernd zum Mittelpunkt der zur Kugel 11b ergänzten Kugelkalotte 11 gerichtet sind.

Gegenüber den Druckschaltern 4 bis 7 ist der Handschalthebel 8 so placiert, daß er zwanglos vom Daumen 10b und Zeigefinger 10c umgriffen ist, wenn die Hand 10 des Fahrzeugführers auf der Handauflage 11a ruht. Daraus ergibt sich eine Anordnung im linken Teil der Kugelkalotte 11. Der so placierte Handschalthebel 8 erleichtert nunmehr auch das Auffinden der oben beschriebenen optimalen Handstellung, da er die Hand 10 automatisch zur richtigen Stelle leitet.

Weitere Schalter 12, 13 mit einem hohen Gefährdungspotential bei einem unbeabsichtigten Betätigen sind im hinteren Randbereich der Kugelkalotte 11 vorgesehen. Damit diese Schaltelemente bei unwillkürlichen Bewegungen der Hand 10 auf der Handauflage 11a nicht unbeabsichtigt betätigt werden können, sind sie in je eine Ausnehmung 11c, 11d des Kalottenrandbereiches eingesetzt. Hier sind sie, für großflächige Betätigungselemente wie die Handfläche nicht erreichbar, von erhabenen Kalottenbereichen geschützt untergebracht.

## Patentansprüche

1. Steuereinrichtung für Nutzfahrzeuge, insbesondere für landwirtchaftlich nutzbare Schlepper, mit einem nahe dem vorderen Endbereich der Armlehne (2) des Fahrersitzes (1) angeordneten Schaltelemententräger (3) für eine Gruppe von Schaltelementen zur Steuerung verschiedener Fahrzeugaggregate, die eine Vielzahl Schalter (4 bis 7) und einen Handschalthebel (8) umfasst, und der eine mit sphärischer Oberfläche versehene Handauflage (11a) für die Handfläche des Fahrzeugführers zugeordnet ist,
**dadurch gekennzeichnet,**
**daß** die Handauflage (11a) an der nach oben gerichteten Oberfläche des Schaltelemententrägers (3) vorgesehen ist, wobei die Schalter (4 bis 7) und der Handschalthebel (8)in Bezug auf die Handauflage (11a) derart angeordnet sind, daß die Schalter (4 bis 7) mit den ausgestreckten Fingern der bestimmungsgemäß auf der Handauflage (11a) aufliegenden Hand bequem erreich- und betätigbar sind, während sich der Schalthebel (8) zwischen dem Daumen (10b) und dem Zeigefinger (10c) der Hand (10) befindet.

2. Steuereinrichtung nach Anspruch 1,
**dadurch gekennzeichnet,**
**daß** die Handauflage (11a) durch einen mit einer der natürlichen Krümmung der Handfläche angepassten Oberfläche versehenen Teil des Schaltelemententrägers (3) gebildet ist.

3. Steuereinrichtung nach Anspruch 1 und 2,
**dadurch gekennzeichnet,**
**daß** der Schaltelemententräger (3) an seiner die Schaltelemente (4 bis 8) aufnehmenden Oberfläche kugelkalottenförmig ausgebildet ist und die Betätigungsrichtungen der Schaltelemente (4 bis 8) annähernd zum Mittelpunkt der zur Kugel (11b) ergänzten Kugelkalotte (11) gerichtet sind.

4. Steuereinrichtung nach den Ansprüchen 1 bis 3,
**dadurch gekennzeichnet,**
**daß** der Schaltelemententräger (3) im vorderen Endbereich der Armlehne (2) des Fahrersitzes (1) befestigt ist.

5. Steuereinrichtung nach Anspruch 4,
**dadurch gekennzeichnet,**
**daß** der Schaltelemententräger (3) unter einem Winkel von 10°-15° gegen die in Fahrzeuglängsrichtung verlaufende Armlehne (2) nach außen abgewinkelt ist.

## Claims

1. Control device for utility vehicles, especially for tractors usable in agriculture, the control device comprising, arranged near the front end-region of the arm rest (2) of the driver's seat (1), a switching element carrier (3) for a group of switching elements for controlling various vehicle units, which group comprises a plurality of switches (4 to 7) and a manual gear shift lever (8), and with which group is associated a hand rest (11a) which is provided with a spherical surface and which is intended for the palm of the vehicle driver's hand, **characterised in that** the hand rest (11a) is provided on the upwardly directed surface of the switching element carrier (3), the switches (4 to 7) and the manual gear shift lever (8) being arranged relative to the hand rest (11a) in such a manner that the switches (4 to 7) can be reached and operated comfortably with the outstretched fingers of the hand resting as directed on the hand rest (11a), while the gear shift lever (8) is located between the thumb (10b) and the index finger (10c) of the hand (10).

2. Control device according to claim 1, **characterised in that** the hand rest (11a) is formed by a portion of the switching element carrier (3), which portion is provided with a surface adapted to the natural curvature of the palm of the hand.

3. Control device according to claims 1 and 2, **characterised in that** the switching element carrier (3) is constructed in the form of a spherical joint at its surface accommodating the switching elements (4 to 8) and the operating directions of the switching elements (4 to 8) are directed approximately to the centre point of the spherical joint (11) which is developed to form the sphere (11b).

4. Control device according to claims 1 to 3, **characterised in that** the switching element carrier (3) is secured in the front end-region of the arm rest (2) of the driver's seat (1).

5. Control device according to claim 4, **characterised in that** the switching element carrier (3) is angled outwards at an angle of 10° - 15° relative to the arm rest (2) which extends in the longitudinal direction of the vehicle.

## Revendications

1. Installation de commande pour véhicule utilitaire, notamment tracteur agricole, comportant un support d'élément de commutation (3) prévu à proximité de la zone d'extrémité avant de l'accoudoir (2) du siège de conducteur (1) pour commander différents équipements du véhicule par un groupe d'éléments de commutation, comprenant un grand nombre de commutateurs (4-7) et un levier de commutation manuel (8), et dont l'appui de main (11a) est muni d'une surface sphérique pour recevoir la surface de la main du conducteur,
**caractérisée en ce que**
l'appui de main (11a) est prévu sur la surface supérieure tournée vers le haut du support d'élément de commutation (3), les commutateurs (4-7) et le levier de commutation manuel étant installés par rapport à l'appui de main (11a) de façon que les commutateurs (4-7) puissent être atteints et actionnés confortablement par les doigts alignés de la main reposant correctement sur l'appui de main (11a) alors que le levier de commutation (8) se trouve entre le pouce (10b) et l'index (10c) de la main (10).

2. Installation de commande selon la revendication 1,
**caractérisée en ce que**
l'appui de main (11a) est formé par la partie du support d'élément de commutation (3) dont la surface supérieure est adaptée à la courbure naturelle de la surface de la main.

3. Installation de commande selon les revendications 1 et 2,
**caractérisée en ce que**
le support d'éléments de commutation (3) comporte une surface supérieure en forme de calotte sphérique recevant les éléments de commutation (4-8), et la direction d'actionnement des éléments de commutation (4-7) est dirigée sensiblement vers le centre de la calotte sphérique (11) qui appartient à la sphère (11b).

4. Installation de commande selon les revendications 1 à 3,
**caractérisée en ce que**
le support d'éléments de commutation (3) est fixé dans la zone d'extrémité avant de l'accoudoir (2) du siège de conducteur (1).

5. Installation de commande selon la revendication 4,
**caractérisée en ce que**
le support d'éléments de commutation (3) est recourbé vers l'extérieur sous un angle de 10°-15° par rapport à la direction longitudinale du véhicule.
